# EUROPÄISCHE PATENTSCHRIFT

(11) **EP 3 520 020 B1**
(45) Veröffentlichungstag und Bekanntmachung des Hinweises auf die Patenterteilung: **08.12.2021**
(21) Anmeldenummer: 17778252.1
(22) Anmeldetag: 28.09.2017
(51) Int. Cl.: G06K 9/00, G08G 1/0962

(54) **VERKEHRSZEICHENKLASSIFIKATION IN EINEM UMGEBUNGSBEREICH EINES KRAFTFAHRZEUGS**
ROAD SIGN CLASSIFICATION IN A SURROUNDING AREA OF A MOTOR VEHICLE
CLASSIFICATION DE SIGNAUX ROUTIERS DANS UNE ZONE ENVIRONNANTE D'UN VÉHICULE AUTOMOBILE

(30) Priorität: 29.09.2016 DE 102016118538
(43) Veröffentlichungstag der Anmeldung: 07.08.2019
(73) Patentinhaber: Valeo Schalter und Sensoren GmbH, 74321 Bietigheim-Bissingen (DE)
(72) Erfinder: SERGEEV, Nikolai, 74321 Bietigheim-Bissingen (DE)
(74) Vertreter: Withopf, Kristina
(86) Internationale Anmeldenummer: PCT/EP2017/074652
(87) Internationale Veröffentlichungsnummer: WO 2018/060344

(56) Entgegenhaltungen:
- EP-A1- 1 327 969
- DE-A1-102007 021 576
- DE-A1-102012 110 595
- DE-A1-102014 217 877
- DE-A1-102015 003 963

## Beschreibung

Die Erfindung betrifft ein Verfahren zum Klassifizieren eines Verkehrszeichens in einem Umgebungsbereich eines Kraftfahrzeugs als ein an einem Nutzfahrzeug angeordneter Verkehrszeichenaufkleber oder als ein stationäres Verkehrsschild, wobei bei dem Verfahren zumindest ein erstes, von einer Kamera des Kraftfahrzeugs erfasstes Bild des Umgebungsbereiches empfangen wird und in dem zumindest einen ersten Bild das Verkehrszeichen erkannt wird. Die Erfindung betrifft außerdem eine Rechenvorrichtung, ein Fahrerassistenzsystem sowie ein Kraftfahrzeug mit einem Fahrerassistenzsystem.

Vorliegend richtet sich das Interesse auf Fahrerassistenzsysteme für Kraftfahrzeuge in Form von sogenannten Verkehrszeichenerkennungssystemen. Bei solchen Verkehrszeichenerkennungssystemen wird in der Regel ein Umgebungsbereich des Kraftfahrzeugs mittels einer Kamera des Kraftfahrzeugs überwacht. Anhand der von der Kamera erfassten Bilder können unter Einsatz von Bilderkennungsalgorithmen Verkehrszeichen in dem Umgebungsbereich erkannt werden. Bedeutungen der Verkehrszeichen, beispielsweise eine Angabe einer Höchstgeschwindigkeit auf einer von dem Kraftfahrzeug befahrenen Fahrbahn, können erkannt werden, basierend auf welchen eine Assistenzfunktion durch das Fahrerassistenzsystem bereitgestellt werden kann. Eine solche Assistenzfunktion kann beispielsweise eine Anzeige des Verkehrszeichens oder ein Hinweis auf die Bedeutung des Verkehrszeichens für einen Fahrer des Kraftfahrzeugs auf einer fahrzeugseitigen Anzeigeeinrichtung sein. Auch kann als die Assistenzfunktion eine Fahrzeuggeschwindigkeit in Abhängigkeit von der aktuell geltenden und anhand des Verkehrszeichens erfassten Höchstgeschwindigkeit automatisch geregelt werden.

Problematisch ist es hingegen, wenn diese von den Kameras erfassten Verkehrszeichen sogenannte Verkehrszeichenaufkleber sind, welche an Nutzfahrzeugen, beispielsweise Lkws, Bussen oder Anhängern, angebracht sind. In diesem Fall ist die Bedeutung des Verkehrszeichens auf das Nutzfahrzeug gerichtet, indem es beispielsweise eine für das Nutzfahrzeug zulässige Höchstgeschwindigkeit beschreibt. Die Bedeutung des Verkehrszeichens ist also irrelevant für das Kraftfahrzeug und soll daher von dem Fahrerassistenzsystem nicht berücksichtigt werden. Dazu muss das erkannte Verkehrszeichen jedoch zunächst als der Verkehrszeichenaufkleber identifiziert werden.

Hierzu beschreibt die US8064643 B2 ein Verfahren zur Erkennung von Verkehrszeichen anhand von Bildern eines Umgebungsbereiches eines Kraftfahrzeugs durch ein rechnergestütztes System des Kraftfahrzeugs. Um dabei ein an einem Nutzfahrzeug bzw. Lastwagen angeordnetes Verkehrszeichen zu erkennen, wird zusätzlich der Lastwagen erkannt. Aus einem solchen Verfahren kann sich jedoch der Nachteil ergeben, dass im Falle einer zu langsamen Detektion des Nutzfahrzeugs der Fahrer des Kraftfahrzeugs bereits über das Verkehrszeichen auf dem Nutzfahrzeug informiert ist, bevor das Nutzfahrzeug erkannt wurde. Probleme ergeben sich außerdem, wenn das Fahrerassistenzsystem nicht dazu ausgelegt ist, Nutzfahrzeuge als solche zu erkennen und zu klassifizieren.

DE 10 2007 021 576 A1 betrifft ein Verfahren und eine Vorrichtung zum Bestimmen der Position eines Verkehrszeichens. Mit Hilfe einer Bilderfassungseinheit eines Kraftfahrzeugs werden mindestens zwei Bilder mit jeweils zumindest einer Abbildung mindestens eines Verkehrszeichens nacheinander als Bildfolge erfasst, wobei die Position der Bilderfassungseinheit durch eine Bewegung des Kraftfahrzeugs zwischen den Aufnahmezeitpunkten des ersten Bildes und des zweiten Bildes geändert wird. Ausgehend vom ersten Bild wird mit Hilfe einer angenommenen Abmessung des Verkehrszeichens eine erste Position des Verkehrszeichens ermittelt. Ausgehend vom zweiten Bild wird mit Hilfe derselben angenommenen Abmessung des Verkehrszeichens eine zweite Position des Verkehrszeichens ermittelt. Ausgehend von der ermittelten ersten Position und von der ermittelten zweiten Position wird eine Position des Verkehrszeichens ermittelt und als ermittelte Position des Verkehrszeichens ausgegeben.

DE 10 2014 217 877 A1 offenbart eine Vorrichtung zum Erkennen eines an einer Straße befindlichen Verkehrszeichens offenbart. Die Vorrichtung weist auf: eine Informationserfassungseinheit, die ein von einer Frontkamera eines Fahrzeugs her erhaltenes Frontbild als Einzelbildeinheit erfasst; eine Bildverarbeitungseinheit, die Verkehrszeichen-Information, welche einen Bewegungsvektorwert und einen Bewegungsgeschwindigkeitswert des in dem Frontbild enthaltenen Verkehrszeichens mittels eines Objektdetektions-Algorithmus aus einer Differenz zwischen einem vorherigen Einzelbild und einem aktuellen Einzelbild detektiert; und einen Filter, der ein irrelevantes Verkehrszeichen herausfiltert, indem er von einer in dem Fahrzeug angeordneten elektronischen Steuereinheit gelieferte Fahrzeug-Fahrinformation, zu der ein Gierratenwert und ein Fahrzeuggeschwindigkeitswert des Fahrzeugs zählen, mit der Verkehrszeichen-Information vergleicht.

Es ist Aufgabe der vorliegenden Erfindung, eine Lösung bereitzustellen, wie erfasste Verkehrszeichen in einem Umgebungsbereich eines Kraftfahrzeugs besonders genau, schnell und zuverlässig klassifiziert werden können.

Diese Aufgabe wird erfindungsgemäß durch ein Verfahren, eine Rechenvorrichtung, ein Fahrerassistenzsystem sowie ein Kraftfahrzeug gemäß den jeweiligen unabhängigen Ansprüchen gelöst. Vorteilhafte Ausführungsformen der Erfindung sind Gegenstand der abhängigen Ansprüche, der Beschreibung sowie der Figuren.

Gemäß einer Ausführungsform eines Verfahrens zum Klassifizieren eines Verkehrszeichens in einem Umgebungsbereich eines Kraftfahrzeugs als ein an einem Nutzfahrzeug angeordneter Verkehrszeichenaufkleber oder als ein stationäres Verkehrsschild wird zumindest ein erstes, von einer Kamera des Kraftfahrzeugs erfasstes Bild des Umgebungsbereiches empfangen und in dem zumindest einen ersten Bild das Verkehrszeichen erkannt. Insbesondere wird anhand des ersten Bildes eine geometrische Abmessung des Verkehrszeichens in dem ersten Bild bestimmt, für das erfasste Verkehrszeichen eine für ein stationäres Verkehrsschild charakteristische erste Referenzabmessung vorgegeben, anhand der geometrischen Abmessung des Verkehrszeichens in dem ersten Bild und anhand der ersten Referenzabmessung eine erste Position des Verkehrszeichens in dem Umgebungsbereich abgeschätzt und anhand der abgeschätzten ersten Position das Verkehrszeichen als der Verkehrszeichenaufkleber oder das stationäre Verkehrsschild klassifiziert.

Es wird anhand des ersten Bildes und zumindest eines zweiten, von der Kamera erfassten Bildes ein Bewegungsverlauf des Verkehrszeichens in den Bildern in Bildkoordinaten bestimmt, ausgehend von der ersten abgeschätzten Position in dem Umgebungsbereich ein erster, ein stationäres Verkehrsschild charakterisierender Bewegungsverlauf in den Bildkoordinaten bestimmt und anhand eines Vergleiches des Bewegungsverlaufes des erfassten Verkehrszeichens mit dem ersten charakterisierenden Bewegungsverlauf das erfasste Verkehrszeichen als das stationäre Verkehrsschild oder der Verkehrszeichenaufkleber klassifiziert.

Es wird also bestimmt, ob das Verkehrszeichen statisch bzw. stationär oder dynamisch ist. Falls das Verkehrszeichen als statisch klassifiziert wurde, wird davon ausgegangen, dass es sich um das stationäre Verkehrsschild handelt. Falls das Verkehrszeichen als dynamisch klassifiziert wurde, wird davon ausgegangen, dass es sich um den Verkehrszeichenaufkleber an dem dem Kraftfahrzeug vorausfahrenden Nutzfahrzeug handelt. Zunächst wird anhand des ersten Bildes und des zumindest einen zweiten Bildes ein Bewegungsverlauf des Verkehrszeichens in den Bildkoordinaten, also ein Bewegungsverlauf der Projektion des Verkehrszeichens, bestimmt. Der Bewegungsverlauf in den Bildkoordinaten kann beispielsweise derart bestimmt werden, dass in dem ersten Bild eine Bildposition des Verkehrszeichens in den Bildkoordinaten bestimmt wird und in dem zumindest einen zweiten Bild eine Bildposition des Verkehrszeichens in Bildkoordinaten bestimmt wird. Eine Änderung der Bildpositionen des Verkehrszeichens zwischen den zwei Bildern, welche aus einem Fortbewegen des Kraftfahrzeugs auf der Fahrbahn resultiert, ergibt dabei den Bewegungsverlauf des Verkehrszeichens. Der Bewegungsverlauf des erfassten Verkehrszeichens in den Bildkoordinaten entspricht dabei einem Ist-Bewegungsverlauf bzw. einem tatsächlichen Bewegungsverlauf der Projektion des Verkehrszeichens in Bildkoordinaten. Die Zeit zwischen zwei nacheinander aufgenommenen Bildern kann beispielsweise zwischen 50 ms und 80 ms, insbesondere 60 ms, betragen. Somit kann beispielsweise alle 60 ms eine Bildposition des Verkehrszeichens bestimmt werden.

Zusätzlich wird nun der erste, das stationäre Verkehrsschild charakterisierende Bewegungsverlauf in den Bildkoordinaten bestimmt. Der erste charakterisierende Bewegungsverlauf entspricht dabei einem ersten Soll-Bewegungsverlauf, welchen die Projektion des Verkehrszeichens aufweist, falls es sich bei dem Verkehrszeichen um ein stationäres Verkehrsschild an der ersten abgeschätzten Position handelt. Zum Bestimmen des ersten charakterisierenden Bewegungsverlaufes können beispielsweise Bildpositionen eines vorgegebenen stationären Referenzverkehrsschildes an der ersten abgeschätzten Position für die zumindest zwei Bilder bestimmt werden.

Zum Identifizieren des Verkehrszeichens als das stationäre Verkehrsschild können nun der Ist-Bewegungsverlauf und der erste Soll-Bewegungsverlauf miteinander verglichen werden. Dazu kann beispielsweise ein Abstand zwischen den Bildverläufen in Bildkoordinaten bestimmt werden. Wenn beispielsweise der Ist-Bewegungsverlauf höchstens um einen vorgegebenen Grenzwert von dem ersten Soll-Bewegungsverlauf abweicht, kann das erfasste Verkehrszeichen als das stationäre Verkehrsschild identifiziert werden. Andernfalls wird das erfasste Verkehrszeichen als ein dynamisches Verkehrszeichen und damit als der Verkehrszeichenaufkleber identifiziert. Durch die Bestimmung, ob es sich um ein statisches oder dynamisches Verkehrszeichen handelt, kann das Verkehrszeichen in dem Umgebungsbereich besonders zuverlässig aus erfassten Bildern des Umgebungsbereiches klassifiziert werden.

Erfindungsgemäß werden dazu beim Vergleich des Bewegungsverlaufes des erfassten Verkehrszeichens mit dem charakterisierenden Bewegungsverlauf nur Bildkoordinaten entlang einer horizontalen Richtung verglichen. Der Erfindung liegt hierbei die Erkenntnis zugrunde, dass sich, auch wenn es sich bei dem erfassten Verkehrszeichen um ein stationäres Verkehrsschild handelt, die vertikalen Bildkoordinaten des erfassten Verkehrsschildes deutlich von den vertikalen Bildkoordinaten des charakterisierenden Bewegungsverlaufes abweichen können, wenn sich das Kraftfahrzeug auf einer unebenen, Bodenwellen aufweisenden Fahrbahn fortbewegt. Aufgrund der unebenen Fahrbahn führt das Kraftfahrzeug beim Fortbewegen eine Nickbewegung durch, wodurch sich das erfasste Verkehrszeichen in dem Bild scheinbar in vertikaler Richtung bewegt. Diese scheinbare vertikale Bewegung des erfassten Verkehrszeichens in den Bildkoordinaten kann dazu führen, dass sich der anhand der Bildpositionen des Verkehrszeichens bestimmte Ist-Bewegungsverlauf außerhalb des durch die zwei charakterisierenden Bewegungsverläufe gebildeten Korridors befindet. Um das Verkehrszeichen dennoch zuverlässig klassifizieren zu können, werden bei der Untersuchung, ob sich der Bewegungsverlauf des erfassten Objektes innerhalb des Korridors befindet, nur die Bildkoordinaten in horizontaler Richtung berücksichtigt. Die Bildkoordinaten in vertikaler Richtung bleiben unberücksichtigt. Somit kann auch bei einer Fahrbahn, auf welcher das Kraftfahrzeug beispielsweise aufgrund von Schlaglöchern, eine Nickbewegung durchführt, ein erfasstes Verkehrszeichen zuverlässig als ein stationäres Verkehrsschild oder als ein Verkehrszeichenaufkleber identifiziert werden, insbesondere ohne den Nickwinkel des Kraftfahrzeugs separat erfassen zu müssen.

In einer besonders bevorzugten Ausführungsform des Verfahrens zum Klassifizieren eines Verkehrszeichens in einem Umgebungsbereich eines Kraftfahrzeugs als ein an einem Nutzfahrzeug angeordneter Verkehrszeichenaufkleber oder als ein stationäres Verkehrsschild wird zumindest ein erstes, von einer Kamera des Kraftfahrzeugs erfasstes Bild des Umgebungsbereiches empfangen und in dem zumindest einen ersten Bild das Verkehrszeichen erkannt. Darüber hinaus wird anhand des ersten Bildes eine geometrische Abmessung des Verkehrszeichens in dem ersten Bild bestimmt, für das erfasste Verkehrszeichen eine für ein stationäres Verkehrsschild charakteristische erste Referenzabmessung vorgegeben, anhand der geometrischen Abmessung des Verkehrszeichens in dem ersten Bild und anhand der ersten Referenzabmessung eine erste Position des Verkehrszeichens in dem Umgebungsbereich abgeschätzt und anhand der abgeschätzten ersten Position das Verkehrszeichen als der Verkehrszeichenaufkleber oder das stationäre Verkehrsschild klassifiziert.

Mittels des Verfahrens können also Verkehrszeichen, welche in Form von Verkehrszeichenaufklebern an Nutzfahrzeugen, beispielsweise Lkws, Bussen oder Anhängern, angebracht sind, von stationären Verkehrsschildern, beispielsweise Geschwindigkeitsschildern an einem Fahrbahnrand, unterschieden werden. Damit kann ein besonders zuverlässiges Fahrerassistenzsystem in Form von einem Verkehrszeichenerkennungssystem realisiert werden, indem von dem Fahrerassistenzsystem nur dann eine vorbestimmte Assistenzfunktion bereitgestellt wird, falls das erfasste Verkehrszeichen eine für das Kraftfahrzeug relevante Bedeutung bzw. Information aufweist. Dies ist insbesondere immer dann der Fall, wenn es sich bei dem Verkehrszeichen um ein stationäres Verkehrsschild handelt. Unter Verkehrszeichenaufklebern bzw. Verkehrszeichenplaketten sind hier Verkehrszeichen zu verstehen, welche an dem Nutzfahrzeug unabhängig von einer Art und Weise der Befestigung angeordnet sind und eine das Nutzfahrzeug charakterisierende Information oder Bedeutung aufweisen. Eine solche Information kann beispielsweise eine für das Nutzfahrzeug erlaubte Höchstgeschwindigkeit auf einer Autobahn, unabhängig von einem tatsächlichen, auf der Autobahn geltenden Tempolimit sein.

Zum Erkennen des Verkehrszeichens wird zunächst das zumindest eine erste, von der Kamera des Kraftfahrzeugs erfasste Bild des Umgebungsbereiches, beispielsweise von einer Rechenvorrichtung des Fahrerassistenzsystems, empfangen und analysiert. Die Kamera kann beispielsweise eine Frontkamera sein, welche an dem Kraftfahrzeug angeordnet ist und dazu ausgelegt ist, den Umgebungsbereich vor dem Kraftfahrzeug während einer Fahrt des Kraftfahrzeugs, beispielsweise in Form von einer Videosequenz, kontinuierlich zu erfassen. In den Bildern des Umgebungsbereiches kann dann von der Rechenvorrichtung, welche beispielsweise in ein fahrzeugseitiges Steuergerät integriert sein kann, das Verkehrszeichen erkannt werden. Beispielsweise können eine Form des Verkehrszeichens sowie die durch das Verkehrszeichen bereitgestellte Information anhand von Objekterkennungsalgorithmen erkannt werden. Bei einem Geschwindigkeitsverkehrszeichen können eine kreisrunde Form des Geschwindigkeitsverkehrszeichens sowie Ziffern, welche ein aktuelle Höchstgeschwindigkeit bzw. ein Tempolimit beschreiben, in dem zumindest einen ersten Bild erkannt bzw. identifiziert werden.

Das Verkehrszeichen kann anhand der ersten Position des Verkehrszeichens in dem Umgebungsbereich relativ zu dem Kraftfahrzeug klassifiziert werden. Die erste Position wird anhand des ersten Bildes insbesondere in dreidimensionalen Weltkoordinaten eines Weltkoordinatensystems geschätzt und beschreibt einen ersten, möglichen Abstand des erfassten Verkehrszeichens zu dem Kraftfahrzeug. Das Weltkoordinatensystem kann beispielsweise ein Fahrzeugkoordinatensystem aufweisend eine erste Achse entlang einer Fahrzeugquerrichtung, eine zweite Achse entlang einer Fahrzeuglängsrichtung und eine dritte Achse entlang einer Fahrzeughochrichtung sein. Der Abstand des Objektes zu dem Kraftfahrzeug wird dabei anhand einer Größe bzw. der geometrischen Abmessung des Verkehrszeichens in dem ersten Bild in einem zweidimensionalen Bildkoordinatensystem aufweisend eine horizontale Bildachse und eine vertikale Bildachse bestimmt. Es kann also anhand der zweidimensionalen Projektion des Verkehrszeichens auf dem ersten Bild, beispielsweise anhand der zweidimensionalen geometrischen Abmessungen des Verkehrszeichens auf dem Bild, die erste Position des realen Verkehrszeichens in dem Umgebungsbereich abgeschätzt werden. Der Abstand des Verkehrszeichens zu dem Kraftfahrzeug wird also nicht direkt bzw. unmittelbar, beispielsweise mittels einer teuren ToF-Kamera (ToF- Time-of-Flight), gemessen, sondern kann anhand der Bilder, welche beispielsweise von einer kostengünstigen monokularen Kamera erfasst werden, abgeschätzt werden.

Zum Abschätzen der ersten Position wird dazu die erste Referenzabmessung vorgegeben. Die erste Referenzabmessung beschreibt dabei eine für ein stationäres Referenzverkehrsschild charakteristische, plausible Abmessung. Die erste Referenzabmessung kann für die Rechenvorrichtung hinterlegt werden, beispielsweise in einer fahrzeugseitigen Speichereinrichtung abgespeichert werden. So kann die erste Position schnell und einfach anhand des ersten Bildes und der hinterlegten Referenzabmessung abgeschätzt werden. Bei der Positionsbestimmung wird dabei das erfasste Verkehrszeichen also als ein stationäres Verkehrsschild angenommen. Mittels dieser ersten, abgeschätzten Position in den Weltkoordinaten, welche anhand der Abmessung des Verkehrszeichens in dem zweidimensionalen Bild bestimmt wurde, kann das Verkehrszeichen schnell und einfach klassifiziert werden.

Es erweist sich als vorteilhaft, wenn für das erfasste Verkehrszeichen eine für das stationäre Verkehrsschild charakteristische zweite Referenzabmessung vorgegeben wird, anhand der Abmessung des Verkehrszeichens in dem Bild und anhand der zweiten Referenzabmessung eine zweite Position in dem Umgebungsbereich abgeschätzt wird und anhand der abgeschätzten ersten und zweiten Position das Verkehrszeichen als der Verkehrszeichenaufkleber oder das stationäre Verkehrsschild klassifiziert wird. Vorzugsweise werden als die erste Referenzabmessung ein vorbestimmter, für das stationäre Verkehrsschild charakteristischer Mindestdurchmesser, insbesondere 40 cm, und als eine zweite Referenzabmessung ein vorbestimmter, für das stationäre Verkehrsschild charakteristischer Maximaldurchmesser, insbesondere 2 m, vorgegeben. Der Erfindung liegt hierbei die Erkenntnis zugrunde, dass anhand des zumindest einen ersten durch die Kamera zweidimensional erfassten Bildes der Abstand des Verkehrszeichens nicht genau bestimmt werden kann, sondern insbesondere entlang einer Kameraachse variieren kann. Daher werden zwei mögliche, plausible Abstände des Verkehrszeichens zu dem Kraftfahrzeug abgeschätzt. Um nun die Positionen des Verkehrszeichens in Weltkoordinaten anhand der zweidimensionalen Bilder plausibel abzuschätzen, werden zwei verschiedene, plausible Abmessungen, insbesondere Durchmesser, für das Verkehrszeichen vorgegeben. Der minimale und der maximale Durchmesser können in der fahrzeugseitigen Speichereinrichtung hinterlegt werden. Somit können also die Abstände des Verkehrszeichens zu dem Kraftfahrzeug plausibel und schnell bestimmt werden, insbesondere ohne den Abstand direkt messen zu müssen.

Gemäß einer Ausführungsform der Erfindung wird zumindest anhand der ersten Position ein Abstand zwischen dem Verkehrszeichen und dem Kraftfahrzeug bestimmt und das Verkehrszeichen als das stationäre Verkehrsschild klassifiziert, falls der Abstand einen vorbestimmten Schwellwert unterschreitet, und als der Verkehrszeichenaufkleber klassifiziert, falls der Abstand den vorbestimmten Schwellwert zumindest überschreitet. Gemäß dieser Ausführungsform wird insbesondere ein lateraler Abstand des Verkehrszeichens entlang einer Fahrzeuglängsrichtung des Kraftfahrzeugs bestimmt. Der Erfindung liegt hierbei die Erkenntnis zugrunde, dass Verkehrszeichenaufkleber in der Regel geringere Abmessungen, insbesondere einen geringeren Durchmesser, aufweisen als stationäre Verkehrsschilder. Würde nun für das erfasste Verkehrszeichen die das stationäre Verkehrsschild charakterisierende Referenzabmessung, beispielsweise ein plausibler Mindestdurchmesser, vorgegeben, so wäre der daraus bestimmte Abstand unrealistisch groß. Anders ausgedrückt wäre das Verkehrszeichen zu weit weg von dem Kraftfahrzeug, als dass die durch das Verkehrszeichen bereitgestellte Information für den Fahrer des Kraftfahrzeugs relevant sein könnte. Wenn also der bestimmte Abstand den Schwellwert überschreitet, so wird dieser als unrealistisch groß bewertet und davon ausgegangen, dass es sich bei dem erfassten Verkehrszeichen um einen Verkehrszeichenaufkleber auf einem Nutzfahrzeug handelt. Gemäß dieser Ausführungsform kann also besonders einfach und zuverlässig anhand von nur einem erfassten Bild das Verkehrszeichen klassifiziert werden, insbesondere ohne dabei das Nutzfahrzeug selbst erkennen und klassifizieren zu müssen.

Es erweist sich als vorteilhaft, wenn anhand des ersten Bildes und anhand einer zweiten vorbestimmten Referenzabmessung des stationären Verkehrsschildes zusätzlich eine zweite Position des Verkehrszeichens in dem Umgebungsbereich abgeschätzt wird, ausgehend von der zweiten abgeschätzten Position in dem Umgebungsbereich ein zweiter, ein stationäres Verkehrsschild charakterisierender Bewegungsverlauf in den Bildkoordinaten bestimmt wird und das erfasste Verkehrszeichen anhand des Vergleiches des Bewegungsverlaufes des erfassten Verkehrszeichens mit dem zweiten charakterisierenden Bewegungsverlauf als das stationäre Verkehrsschild oder der Verkehrszeichenaufkleber klassifiziert wird.

Wie bereits beschrieben, kann anhand der durch die Kamera erfassten zweidimensionalen Bilder der Abstand des Verkehrszeichens nicht genau bestimmt werden, sondern kann insbesondere entlang Kameraachse variieren. Daher werden die zwei möglichen, plausiblen Positionen bzw. Abstände des Verkehrszeichens zu dem Kraftfahrzeug abgeschätzt. Daraufhin kann zusätzlich zu dem ersten charakterisierenden Bewegungsverlauf in Bildkoordinaten, welcher für das stationäre Referenzverkehrsschild an der ersten Position in Weltkoordinaten bestimmt wird, der zweite charakterisierende Bewegungsverlauf in Bildkoordinaten für das Referenzverkehrsschild an der zweiten Position in Weltkoordinaten bestimmt werden. Der zweite charakterisierende Bewegungsverlauf entspricht dabei einem zweiten Soll-Bewegungsverlauf, welchen das Verkehrszeichen aufweist, falls es sich um ein stationäres Verkehrsschild an der zweiten abgeschätzten Position handelt. Zusätzlich kann nun der Ist-Bewegungsverlauf mit dem zweiten Soll-Bewegungsverlauf verglichen werden und das erfasste Verkehrszeichen als statisch identifiziert werden, wenn der Ist-Bewegungsverlauf höchstens um den vorgegebenen Grenzwert von den zweiten Soll-Bewegungsverlauf abweicht. Durch das Bestimmen des zweiten Soll-Bewegungsverlaufes und das Vergleichen des Ist-Bewegungsverlaufes mit beiden Soll-Bewegungsverläufen ist das Verfahren besonders genau und zuverlässig gestaltet.

Es kann vorgesehen sein, dass zum Bestimmen eines charakterisierenden Bewegungsverlaufes eine Fahrzeuggeschwindigkeit und/oder eine Drehrate des Kraftfahrzeugs um eine Fahrzeughochachse erfasst wird. Anhand der Fahrzeuggeschwindigkeit und/oder der Drehrate kann also ausgehend von der ersten abgeschätzten Position und der zweiten abgeschätzten Position für jeden Zeitpunkt, an welchem ein Bild erfasst wird, die Position des Verkehrszeichens im Falle eines stationären Verkehrsschildes in dem Weltkoordinatensystem, also beispielsweise die Position des Referenzverkehrsschildes, in dem Umgebungsbereich relativ zum Kraftfahrzeug, bestimmt und in die Bildpositionen in den entsprechenden Bildkoordinaten des zu dem Zeitpunkt erfassten Bildes umgerechnet werden. Somit kann für jedes Bild die Bildposition des Referenzverkehrsschildes und damit eine Soll-Bildposition bestimmt werden, welche das erfasste Verkehrszeichen in dem Bild aufweist, falls das erfasste Verkehrszeichen ein stationäres Verkehrsschild ist. Die Veränderung der Soll-Bildpositionen zwischen zwei Bildern ergibt den Soll-Bewegungsverlauf, also den ein stationäres Verkehrsschild charakterisierenden Bewegungsverlauf.

Besonders bevorzugt wird das erfasste Verkehrszeichen als das stationäre Verkehrsschild identifiziert, wenn der Bewegungsverlauf des erfassten Verkehrszeichens innerhalb eines durch den ersten und den zweiten charakterisierenden Bewegungsverlauf gebildeten Korridors liegt, und andernfalls als der an dem Nutzfahrzeug angeordnete Verkehrszeichenaufkleber klassifiziert. Anders ausgedrückt bedeutet dies, dass der erste und der zweite charakteristische Bewegungsverlauf in den Bildkoordinaten den Korridor, also einen Bewegungsbereich, ausbilden, innerhalb dessen sich das erfasste Verkehrszeichen bewegt, falls es sich um das stationäre Verkehrsschild handelt. Der Korridor kann auch um einen Toleranzbereich erweitert werden, sodass das erfasste Verkehrszeichen auch dann korrekterweise als stationäres Verkehrsschild identifiziert wird, wenn sich der Bewegungsverlauf des erfassten Verkehrszeichens außerhalb des Korridors, aber innerhalb des Toleranzbereiches befindet.

Dabei kann vorgesehen sein, dass der charakterisierende Bewegungsverlauf unter der Annahme bestimmt wird, dass sich das Kraftfahrzeug auf einer ebenen Fahrbahn fortbewegt. Unter einer ebenen Fahrbahn ist hier eine Fahrbahn zu verstehen, welche keine Bodenwellen oder Schlaglöcher aufweist. Es wird also angenommen, dass das Kraftfahrzeug beim Fortbewegen keine Nickbewegung, also keine Drehbewegung um eine Fahrzeugquerachse, durchführt. Somit können die charakterisierenden Bewegungsverläufe bestimmt werden, ohne dass der Nickwinkel des Kraftfahrzeugs aufwendig erfasst werden muss.

Besonders bevorzugt wird das Verkehrszeichen als das stationäre Verkehrsschild erkannt, falls in zumindest einem der Bilder ein das Verkehrszeichen haltender Pfosten erkannt wird. Stationäre Verkehrsschilder, welche sich am Fahrbahnrand befinden, weisen üblicherweise Pfosten auf, durch welche die Verkehrsschilder gehalten werden. Durch die Erkennung des Postens, welcher bei Verkehrszeichenaufkleber üblicherweise nicht vorhanden ist, kann die Klassifizierung des Verkehrszeichens anhand der abgeschätzten Position plausibilisiert bzw. verifiziert werden. Das Verfahren ist somit besonders zuverlässig gestaltet.

In einer Weiterbildung der Erfindung kann vorgesehen sein, dass eine durch das Verkehrszeichen bereitgestellte Information, insbesondere eine in dem Umgebungsbereich geltende Höchstgeschwindigkeit, einem Fahrerassistenzsystem zum Unterstützen eines Fahrers des Kraftfahrzeugs als eine Eingangsgröße bereitgestellt wird, falls das Verkehrszeichen als das stationäre Verkehrsschild klassifiziert wurde, und ignoriert wird, falls das Verkehrszeichen als der an dem Nutzfahrzeug angeordnete Verkehrszeichenaufkleber klassifiziert wurde. Mit anderen Worten bedeutet dies, dass durch das Fahrerassistenzsystem nur dann eine Assistenzfunktion bereitgestellt wird, wenn das Verkehrszeichen eine für das Kraftfahrzeug relevante Bedeutung hat. Eine solche Assistenzfunktion kann beispielsweise das Anzeigen der in dem Verkehrsschild hinterlegten Informationen, beispielsweise die Höchstgeschwindigkeit bzw. das Tempolimit auf der Fahrbahn des Kraftfahrzeugs, auf einer fahrzeugseitigen Anzeigeeinrichtung sein. Auch kann als die Assistenzfunktion ein Warnhinweis ausgegeben werden, falls eine Geschwindigkeit des Kraftfahrzeugs die auf der Fahrbahn geltende Höchstgeschwindigkeit überschreitet. Alternativ oder zusätzlich kann als die Assistenzfunktion die Geschwindigkeit des Kraftfahrzeugs basierend auf der Geschwindigkeitsinformation auf dem Verkehrsschild geregelt werden. Verkehrszeichenaufkleber, welcher lediglich das Nutzfahrzeug betreffende Informationen aufweisen, werden hingegen ignoriert und resultieren nicht in einer Assistenzfunktion des **F**ahrerassistenzsystems.

Die Erfindung betrifft außerdem eine Rechenvorrichtung für ein Fahrerassistenzsystem eines Kraftfahrzeugs, welche dazu ausgelegt ist, ein erfindungsgemäßes Verfahren oder eine Ausführungsform davon durchzuführen. Die Rechenvorrichtung kann eine Bildverarbeitungseinrichtung zum Analysieren der von der Kamera erfassten und von der Rechenvorrichtung empfangenen Bilder aufweisen. Außerdem kann die Rechenvorrichtung eine Steuereinrichtung zum Bereitstellen von vorbestimmten Assistenzfunktionen aufweisen. Die Rechenvorrichtung kann dazu ausgelegt sein, in ein fahrzeugseitiges Steuergerät integriert zu werden.

Ein erfindungsgemäßes Fahrerassistenzsystem für ein Kraftfahrzeug zum Klassifizieren eines Verkehrszeichens in einem Umgebungsbereich eines Kraftfahrzeugs als ein an einem nutzfahrzeugangebrachter Verkehrszeichenaufkleber oder ein stationäres Verkehrsschild umfasst zumindest eine Kamera zum Erfassen eines Umgebungsbereiches des Kraftfahrzeugs sowie eine erfindungsgemäße Rechenvorrichtung. Das Fahrerassistenzsystem ist insbesondere als ein Verkehrszeichenerkennungssystem ausgebildet.

Ferner betrifft die Erfindung ein Kraftfahrzeug mit einem erfindungsgemäßen Fahrerassistenzsystem. Das Kraftfahrzeug ist insbesondere als ein Personenkraftwagen ausgebildet. Die zumindest eine Kamera ist insbesondere eine an dem Kraftfahrzeug montierte Außenkamera.

Die mit Bezug auf das erfindungsgemäße Verfahren vorgestellten bevorzugten Ausführungsformen und deren Vorteile gelten entsprechend für die erfindungsgemäße Rechenvorrichtung, für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung.

Dabei zeigen:
- Fig. 1: eine schematische Darstellung einer Ausführungsform eines erfindungsgemäßen Kraftfahrzeugs;
- Fig. 2: eine schematische Darstellung eines Bildes eines Umgebungsbereiches des Kraftfahrzeugs, welches ein Verkehrszeichen in Form von einem Verkehrszeichenaufkleber zeigt;
- Fig. 3: eine weitere schematische Darstellung eines Bildes des Umgebungsbereiches des Kraftfahrzeugs, welches ein Verkehrszeichen in Form von einem stationären Verkehrsschild zeigt;
- Fig. 4: eine schematische Darstellung einer Ausführungsform zur Klassifizierung eines erfassten Verkehrszeichens; und
- Fig. 5: eine schematische Darstellung einer weiteren Ausführungsform zur Klassifizierung eines erfassten Verkehrszeichens.

In den Figuren sind gleiche sowie funktionsgleiche Elemente mit den gleichen Bezugszeichen versehen.

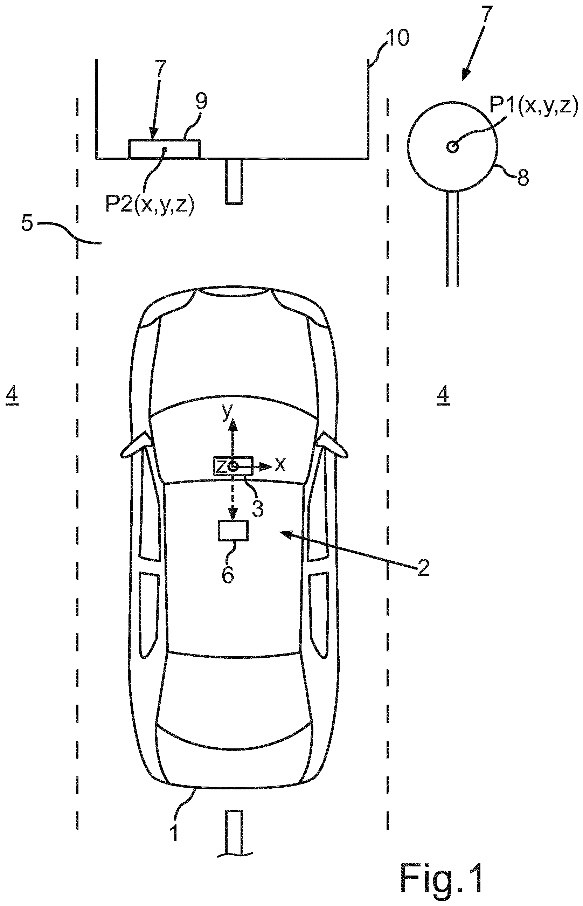

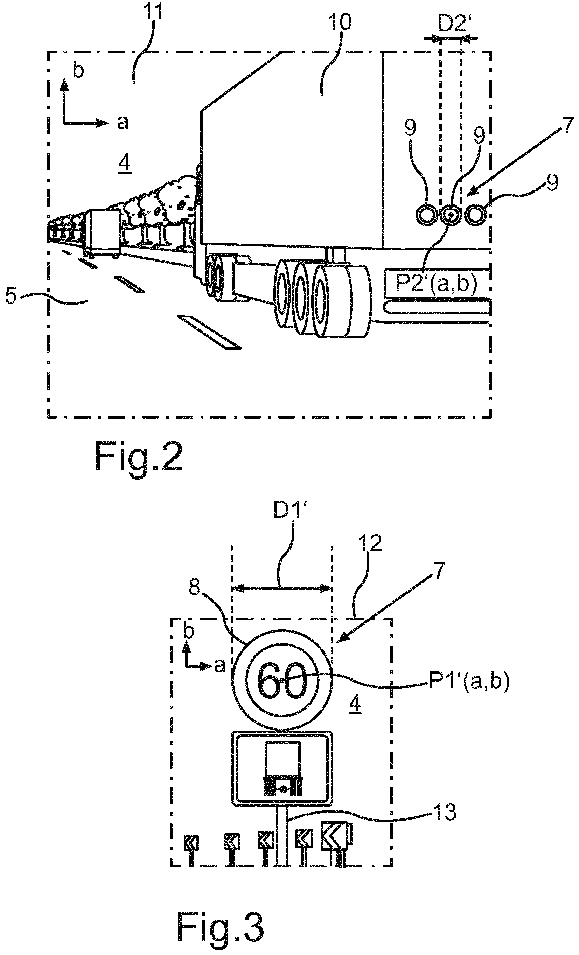

Fig. 1 zeigt ein Kraftfahrzeug 1 mit einem Fahrerassistenzsystem 2. Das Kraftfahrzeug 1 ist im vorliegenden Fall als ein Personenkraftwagen ausgebildet. Das Fahrerassistenzsystem 2 umfasst zumindest eine Kamera 3, welche an dem Kraftfahrzeug 1 angeordnet ist und dazu ausgelegt ist, einen Umgebungsbereich 4 des Kraftfahrzeugs in zweidimensionalen Bildern 11, 12 (siehe Fig. 2, Fig. 3) zu erfassen. Insbesondere erfasst die Kamera 3 Bilder von einem sich in Fahrtrichtung (y-Richtung) vor und seitlich (x-Richtung) vor dem Kraftfahrzeug 1 befindlichen Umgebungsbereich 4, während sich das Kraftfahrzeug 1 auf einer Fahrbahn 5 fortbewegt.

Das Fahrerassistenzsystem 2 umfasst außerdem eine Rechenvorrichtung 6, welche dazu ausgelegt ist, die von der Kamera 3 erfassten Bilder 11, 12 des Umgebungsbereiches 4 zu analysieren, um beispielsweise Informationen aus den erfassten Bildern 11, 12 zu extrahieren. Das Fahrerassistenzsystem 2 ist insbesondere als ein Verkehrszeichenerkennungssystem ausgebildet, welches dazu ausgelegt ist, Verkehrszeichen 7 in dem Umgebungsbereich 4 zu erkennen. Basierend auf einer Bedeutung des Verkehrszeichens 7, beispielsweise einer auf der Fahrbahn 5 geltenden Höchstgeschwindigkeit, kann das Fahrerassistenzsystem 2 eine Assistenzfunktion bereitstellen, beispielsweise eine Geschwindigkeit des Kraftfahrzeugs 1 automatisch regeln und/oder ein Hinweissignal ausgegeben, falls die Geschwindigkeit des Kraftfahrzeugs 1 die Höchstgeschwindigkeit überschreitet.

Dabei soll die Assistenzfunktion durch das Fahrerassistenzsystem 2 jedoch nur dann bereitgestellt werden, falls das Verkehrszeichen 7 für das Kraftfahrzeug 1 relevant ist bzw. eine für das Kraftfahrzeug 1 relevante Bedeutung hat. Solche für das Kraftfahrzeug 1 relevanten Verkehrszeichen 7 sind beispielsweise stationäre Verkehrsschilder 8, welche sich an einem Rand der Fahrbahn 5 befinden. Irrelevante Verkehrszeichen 7 sind beispielsweise Verkehrszeichenaufkleber 9 auf Nutzfahrzeugen 10, beispielsweise einem Lkw, einem Bus oder einem Anhänger eines anderen Fahrzeugs. Diese irrelevanten Informationen sollen von dem Fahrerassistenzsystem 2 ignoriert werden.

Die Rechenvorrichtung 6 ist daher dazu ausgelegt, in den von der Kamera 3 erfassten Bildern 11, 12 das Verkehrszeichen 7, beispielsweise mittels Objekterkennungsalgorithmen, zu erkennen. Das Verkehrszeichen 7 in Form von dem stationären Verkehrsschild 8 weist in dem Umgebungsbereich 4 eine tatsächliche Position P1(x, y, z) relativ zum Kraftfahrzeug 1 auf. Das Verkehrszeichen 7 in Form von dem Verkehrszeichenaufkleber 9 weist eine tatsächliche Position P2(x, y, z) relativ zum Kraftfahrzeug 1 auf. Die Positionen P1, P2 sind dabei dreidimensionale Positionen in einem Weltkoordinatensystem x, y, z, welches hier als ein Fahrzeugkoordinatensystem definiert ist. Dabei verläuft die x-Achse des Weltkoordinatensystems x, y, z entlang einer Fahrzeugquerrichtung, die y-Achse entlang einer Fahrzeuglängsrichtung und die z-Achse entlang einer Fahrzeughochrichtung.

Die Rechenvorrichtung 6 ist nun dazu ausgelegt, das Verkehrszeichen 7 zu klassifizieren, also zu identifizieren, ob es sich bei dem Verkehrszeichen 7 um ein stationäres, in dem Umgebungsbereich 4 ortsfestes Verkehrsschild 8 oder um einen Verkehrszeichenaufkleber 9, beispielsweise einen Geschwindigkeitsaufkleber auf dem Nutzfahrzeug 10, handelt. Die Klassifizierung des Verkehrszeichens 7 wird anhand des Bildes 11, 12 durchgeführt. Fig. 2 zeigt ein von der Kamera 3 aufgenommenes Bild 11 des Umgebungsbereiches 4 mit einer ersten Verkehrssituation, wobei in dem Bild 11 das Nutzfahrzeug 10 sowie das Verkehrszeichen 7 in Form von dem Verkehrszeichenaufkleber 9 auf dem Nutzfahrzeug 7 dargestellt ist. Fig. 3 zeigt ein von der Kamera 3 aufgenommenes Bild 12 des Umgebungsbereiches 4 mit einer zweiten Verkehrssituation, wobei das Bild 12 hier das Verkehrszeichen 7 in Form von einem stationären Verkehrsschild 8 aufweist.

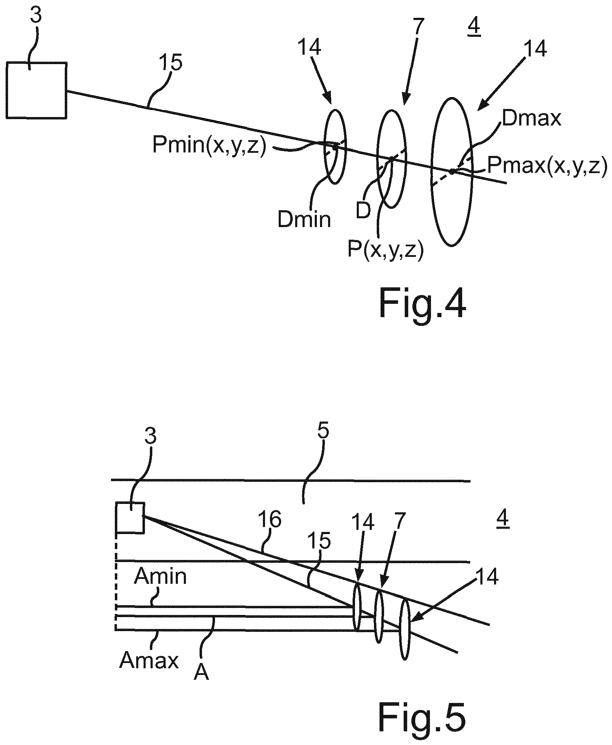

Zum Klassifizieren des Verkehrszeichens 7 wird nun eine geometrische Abmessung des jeweiligen Verkehrszeichens 7 in dem jeweiligen Bild 11, 12 in Bildkoordinaten a, b bestimmt. Das Verkehrsschild 8 weist in dem Bild 12 als die Abmessung einen Durchmesser D1' auf. Der Verkehrszeichenaufkleber 9 weist in dem Bild 11 einen Durchmesser D2' auf. Anhand der Abmessung D1', D2' des Verkehrszeichens 7 wird nun eine Position P(x, y, z) des Verkehrszeichens 7 (siehe Fig. 4, Fig. 5) in dem Umgebungsbereich 4 abgeschätzt. Die Position P(x, y, z) entspricht dabei nicht notwendigerweise der realen, tatsächlichen Position P1, P2 des Verkehrszeichens 7 in dem Umgebungsbereich 4. Die Position P(x, y, z) wird nämlich bestimmt, indem für die Abmessung des Verkehrszeichens 7, beispielsweise für den tatsächlichen Durchmesser D, eine für ein stationäres Referenzverkehrsschild 14 charakteristische Referenzabmessung Dmin, Dmax (siehe Fig. 4) vorgegeben wird. In Fig. 4 werden beispielsweise ein Minimaldurchmesser Dmin, welcher für ein stationäres Referenzverkehrsschild 14 plausibel ist, und ein Maximaldurchmesser Dmax, welcher für das stationäre Referenzverkehrsschild 14 ebenfalls plausibel ist, vorgegeben. Der Minimaldurchmesser Dmin kann beispielsweise 40 cm betragen und der Maximaldurchmesser Dmax kann beispielsweise 2 m betragen.

Falls für das in dem Bild 11, 12 erfasste Verkehrszeichen 7 der Minimaldurchmesser Dmin angenommen wird, so wird anhand des Durchmessers D1', D2' des Verkehrszeichens 7 in dem Bild 11, 12 die Position P(x, y, z) des Verkehrszeichens 7 als eine erste Position Pmin(x, y, z) bestimmt. Falls für das in dem Bild 11, 12 erfasste Verkehrszeichen 7 der Maximaldurchmesser Dmax angenommen wird, so wird anhand des Durchmessers D1', D2' des Verkehrszeichens 7 in dem Bild 11, 12 die Position P(x, y, z) des Verkehrszeichens 7 als eine zweite Position Pmax(x, y, z) bestimmt. Falls für das in dem Bild 11, 12 erfasste Verkehrszeichen 7 ein Durchmesser angenommen wird, welcher zwischen dem Minimaldurchmesser Dmin und dem Maximaldurchmesser Dmax liegt, so wird anhand des Durchmessers D1', D2' des Verkehrszeichens 7 die Position P(x, y, z) des Verkehrszeichens 7 zwischen der ersten und der zweiten Position Pmin(x, y, z), Pmax(x, y, z) liegend bestimmt.

Aus den Positionen Pmin und Pmax können nun ein minimaler, lateraler Abstand Amin und ein maximaler, lateraler Abstand Amax des Verkehrszeichens 7 zu dem Kraftfahrzeug bestimmt werden. Die Position P(x, y, z) bzw. ein lateraler Abstand A des Verkehrszeichens 7 wird hier entlang von Kameraachsen 15, 16 als zwischen den zwei Positionen Pmin, Pmax bzw. den Abständen Amin, Amax liegend angenommen. Die Kameraachse 15 verläuft hier durch ein Zentrum der Verkehrszeichen 7, 14, die Kameraachse 16 tangential zu einem Rand der Verkehrszeichen 7, 14.

Der Abstand A wird nun mit einem vorbestimmten Schwellwert verglichen. Falls es sich bei dem erfassten Verkehrszeichen 7 um das Verkehrsschild 8 gemäß Fig. 3 handelt, stellt die Position P(x, y, z) in etwa die tatsächliche Position P1 des Verkehrszeichens 7 in dem Umgebungsbereich 4 dar und der Abstand A unterschreitet den vorbestimmten Schwellwert. Dies resultiert daraus, dass die Position P(x, y, z) dadurch bestimmt wird, dass angenommen wird, der Durchmesser D1' wäre ein für das stationäre Verkehrsschild 8 charakteristischer Referenzdurchmesser Dmin, Dmax oder ein dazwischen liegender Wert. Die Annahme, dass es sich bei dem Durchmesser D1' um einen für das stationäre Verkehrsschild charakteristischen Referenzdurchmesser Dmin, Dmax oder einen dazwischen liegenden Wert handelt, ist hier korrekt, da es sich bei dem Verkehrszeichen 7 in dem Bild 12 um ein solches stationäres Verkehrsschild 8 handelt. Der bestimmte Abstand A unterschreitet den Schwellwert und wird somit als plausibel angenommen. Dadurch wird auch die durch das Verkehrszeichen 7 bereitgestellte Information als für das Kraftfahrzeug 1 relevant angesehen.

Falls es sich aber bei dem erfassten Verkehrszeichen 7 um den Verkehrszeichenaufkleber 9 gemäß Fig. 2 handelt, stellt die Position P(x, y, z) nicht die tatsächliche Position P2 des Verkehrszeichens 7 in dem Umgebungsbereich 4 dar und der Abstand A überschreitet den vorbestimmten Schwellwert. Hier ist die Annahme, dass es sich bei dem Durchmesser D2' um einen für das stationäre Verkehrsschild 14 charakteristischen Referenzdurchmesser Dmin, Dmax oder einen dazwischen liegenden Wert handelt, nicht korrekt, da Verkehrszeichenaufkleber 9 in der Regel deutlich kleinere Durchmesser aufweisen als Verkehrsschilder 8. Daher erscheint das Verkehrszeichen 7, für welchen der für das stationäre Verkehrsschild 14 charakteristische Durchmesser Dmin, Dmax angenommen wurde, deutlich weiter weg. Dadurch überschreitet den Abstand A den Schwellwert und wird als unplausibel angenommen. Somit wird die durch das Verkehrszeichen 7 bereitgestellte Information als für das Kraftfahrzeug 1 irrelevant angesehen und ignoriert. Falls also der Abstand A den Schwellwert unterschreitet, wird das Verkehrszeichen 7 als das Verkehrsschild 8 klassifiziert, falls der Abstand A den Schwellwert überschreitet, wird das Verkehrszeichen 7 als der Verkehrszeichenaufkleber 9 klassifiziert.

Wenn in den Bildern 11, 12, wie hier in dem Bild 12 gemäß Fig. 3, ein das Verkehrszeichen 7 haltender Pfosten 13 erkannt wird, so kann das Verkehrszeichen 7 als das stationäre Verkehrsschild 8 klassifiziert werden. Durch die Erkennung des Pfostens 13 kann die Klassifizierung des Verkehrszeichens 7 also überprüft und verifiziert werden.

Alternativ oder zusätzlich zu der Klassifizierung des Verkehrszeichens 7 anhand des Abstands Amin, Amax, A kann anhand der Bilder 11, 12 bestimmt werden, ob das Verkehrszeichen 7 statisch und damit das Verkehrsschild 8 oder dynamisch und damit der Verkehrszeichenaufkleber 9 ist. Dazu wird ein jeweiliger Bewegungsverlauf des Verkehrszeichens 7 anhand der Bilder 11, 12 bestimmt. Beispielsweise wird ein Bewegungsverlauf des Verkehrszeichenaufklebers 9 anhand des Bildes 11 und anhand eines hier nicht gezeigten, beispielsweise zeitlich davor aufgenommenen Bildes, welches ebenfalls die erste Verkehrssituation mit dem Nutzfahrzeug 10 und dem Verkehrszeichenaufkleber 9 zeigt, in den Bildkoordinaten a, b bestimmt. Dabei kann eine Veränderung einer Bildposition P2'(a, b) des Verkehrszeichens 7 zwischen dem Bild 11 und dem davor aufgenommenen Bild in den Bildkoordinaten a, b bestimmt werden. Auch kann ein Bewegungsverlauf des Verkehrsschildes 8 anhand des Bildes 12 und anhand eines, beispielsweise zeitlich davor aufgenommenen Bildes, welches die zweite Verkehrssituation mit dem Verkehrsschild 8 zeigt, bestimmt werden. Dazu kann eine Veränderung einer Bildposition P1'(a, b) des Verkehrsschildes 8 zwischen dem Bild 12 und dem davor aufgenommenen Bild in den Bildkoordinaten a, b bestimmt werden.

Zusätzlich können ausgehend von der ersten abgeschätzten Position Pmin und der zweiten abgeschätzten Position Pmax Bewegungsverläufe, welche für ein stationäres Verkehrsschild, beispielsweise für das Referenzverkehrsschild 14, charakteristisch sind, in Bildkoordinaten a, b bestimmt werden. Der erste charakterisierende Bewegungsverlauf ist dabei charakteristisch für das stationäre Referenzverkehrsschild 14 an der ersten, abgeschätzten Position Pmin und der zweite charakterisierende Bewegungsverlauf ist charakteristisch für das stationäre Referenzverkehrsschild 14 an der zweiten, abgeschätzten Position Pmax. Die charakterisierenden Bewegungsverläufe werden bestimmt, indem beispielsweise die Bildpositionen des stationären Referenzverkehrsschildes 14 in den Bildern 11, 12 in Bildkoordinaten a, b bestimmt werden. Dazu werden für die Bildpositionen des stationären Referenzverkehrsschildes 14 in dem jeweiligen Bild 11, 12 die erste Position Pmin und die zweite Position Pmax in Bildkoordinaten a, b umgerechnet. Die charakteristischen Bewegungsverläufe können beispielsweise anhand von der aktuellen Geschwindigkeit des Kraftfahrzeugs 1 bestimmt werden. Außerdem werden die charakterisierenden Bewegungsverläufe unter der Annahme bestimmt, dass die Fahrbahn 5, auf welcher sich das Kraftfahrzeug 1 fortbewegt, eben ist und beispielsweise keine Schlaglöcher oder Bodenwellen aufweist.

Die beiden bestimmten charakteristischen Bewegungsverläufe bilden einen Korridor aus, wobei das erfasste Verkehrszeichen 7 als statisch identifiziert wird, wenn sich der Bewegungsverlauf des erfassten Verkehrszeichens 7 innerhalb des Korridors befindet, und andernfalls als dynamisch identifiziert wird. Das erfasste Verkehrszeichen 7 wird also als das stationäre Verkehrsschild 8 identifiziert, wenn sich der Bewegungsverlauf des erfassten Verkehrszeichens 7 innerhalb des Korridors befindet, und andernfalls als der Verkehrszeichenaufkleber 9 identifiziert. Der anhand von Bild 11 und dem zeitlich davor erfassten Bild der gleichen Verkehrssituation bestimmte Bewegungsverlauf wird sich außerhalb des Korridors befinden, sodass das Verkehrszeichen 7 als der Verkehrszeichenaufkleber 9 identifiziert wird. Der anhand von Bild 12 und dem zeitlich davor erfassten Bild der gleichen Verkehrssituation bestimmte Bewegungsverlauf wird sich innerhalb des Korridors befinden, sodass das Verkehrszeichen 7 als das stationäre Verkehrsschild 8 identifiziert wird.

## Patentansprüche

1. Verfahren zum Klassifizieren eines Verkehrszeichens (7) in einem Umgebungsbereich (4) eines Kraftfahrzeugs (1) als ein an einem Nutzfahrzeug (10) angeordneter Verkehrszeichenaufkleber (9) oder als ein stationäres Verkehrsschild (8), wobei bei dem Verfahren zumindest ein erstes, von einer Kamera (3) des Kraftfahrzeugs (1) erfasstes Bild (11, 12) des Umgebungsbereiches (4) empfangen wird und in dem zumindest einen ersten Bild (11, 12) das Verkehrszeichen (7) erkannt wird, wobei anhand des ersten Bildes (11, 12) eine geometrische Abmessung (D1', D2') des Verkehrszeichens (7) in dem ersten Bild (11, 12) bestimmt wird, für das erfasste Verkehrszeichen (7) eine für ein stationäres Verkehrsschild (14) charakteristische erste Referenzabmessung (Dmin, Dmax) vorgegeben wird, anhand der geometrischen Abmessung (D1', D2') des Verkehrszeichens (7) in dem ersten Bild (11, 12) und anhand der ersten Referenzabmessung (Dmin, Dmax) eine erste Position (Pmin, Pmax) des Verkehrszeichens (7) in dem Umgebungsbereich (4) abgeschätzt wird und anhand der abgeschätzten ersten Position (Pmin, Pmax) das Verkehrszeichen (7) als der Verkehrszeichenaufkleber (9) oder das stationäre Verkehrsschild (8) klassifiziert wird, wobei anhand des ersten Bildes (11, 12) und zumindest eines zweiten, von der Kamera (3) erfassten Bildes ein Bewegungsverlauf des Verkehrszeichens (7) in den Bildern (11, 12) in Bildkoordinaten (a, b) bestimmt wird, **dadurch gekennzeichnet, dass** ausgehend von der ersten abgeschätzten Position (Pmin, Pmax) in dem Umgebungsbereich (4) ein erster, ein stationäres Verkehrsschild (14) charakterisierender Bewegungsverlauf in den Bildkoordinaten (a, b) bestimmt wird und anhand eines Vergleiches des Bewegungsverlaufes des erfassten Verkehrszeichens (7) mit dem ersten charakterisierenden Bewegungsverlauf das erfasste Verkehrszeichen (7) als das stationäre Verkehrsschild (8) oder der Verkehrszeichenaufkleber (9) klassifiziert wird, und dass beim Vergleich des Bewegungsverlaufes des erfassten Verkehrszeichens (7) mit dem charakterisierenden Bewegungsverlauf nur Bildkoordinaten (a, b) entlang einer horizontalen Richtung verglichen werden.

2. Verfahren nach Anspruch 1,
**dadurch gekennzeichnet, dass**
für das erfasste Verkehrszeichen (7) eine für das stationäre Verkehrsschild (14) charakteristische zweite Referenzabmessung vorgegeben wird, anhand der Abmessung des Verkehrszeichens (7) in dem Bild (11, 12) und anhand der zweiten Referenzabmessung eine zweite Position (Pmin, Pmax) in dem Umgebungsbereich (4) abgeschätzt wird und anhand der abgeschätzten ersten und zweiten Position (Pmin, Pmax) das Verkehrszeichen (7) als der Verkehrszeichenaufkleber (9) oder das stationäre Verkehrsschild (8) klassifiziert wird.

3. Verfahren nach Anspruch 1 oder 2,
**dadurch gekennzeichnet, dass**
als die erste Referenzabmessung ein vorbestimmter, für das stationäre Verkehrsschild (14) charakteristischer Mindestdurchmesser (Dmin) und als eine zweite Referenzabmessung ein vorbestimmter, für das stationäre Verkehrsschild (14) charakteristischer Maximaldurchmesser (Dmax vorgegeben werden.

4. Verfahren nach Anspruch 3, **dadurch gekennzeichnet, dass** der Mindestdurchmesser (Dmin) 40 cm und/oder der Maximaldurchmesser (Dmax) 2m beträgt.

5. Verfahren nach einem der vorhergehenden Ansprüche,
**dadurch gekennzeichnet, dass**
zumindest anhand der ersten Position (Pmin, Pmax) ein lateraler Abstand (Amin, Amax, A) zwischen dem Verkehrszeichen (7) und dem Kraftfahrzeug (1) bestimmt wird und das Verkehrszeichen (7) als das stationäre Verkehrsschild (8) klassifiziert wird, falls der laterale Abstand (Amin, Amax, A) einen vorbestimmten Schwellwert unterschreitet, und das Verkehrszeichen (7) als der Verkehrszeichenaufkleber (9) klassifiziert wird, falls der laterale Abstand (Amin, Amax, A) den vorbestimmten Schwellwert zumindest überschreitet.

6. Verfahren nach einem der vorhergehenden Ansprüche,
**dadurch gekennzeichnet, dass**
anhand des ersten Bildes (11, 12) und anhand einer zweiten vorbestimmten Referenzabmessung (Dmin, Dmax) des stationären Verkehrsschildes (14) zusätzlich eine zweite Position (Pmin, Pmax) des Verkehrszeichens (7) in dem Umgebungsbereich (4) abgeschätzt wird, ausgehend von der zweiten abgeschätzten Position (Pmin, Pmax) in dem Umgebungsbereich (4) ein zweiter, ein stationäres Verkehrsschild charakterisierender Bewegungsverlauf in den Bildkoordinaten (a, b) bestimmt wird und das erfasste Verkehrszeichen (7) anhand des Vergleiches des Bewegungsverlaufes des erfassten Verkehrszeichens (7) mit dem zweiten charakterisierenden Bewegungsverlauf als das stationäre Verkehrsschild (8) oder der Verkehrszeichenaufkleber (9) klassifiziert wird.

7. Verfahren nach Anspruch 6,
**dadurch gekennzeichnet, dass**
das erfasste Verkehrszeichen (7) als das stationäre Verkehrsschild (8) identifiziert wird, wenn der Bewegungsverlauf des erfassten Verkehrszeichens (7) innerhalb eines durch den ersten und den zweiten charakterisierenden Bewegungsverlauf gebildeten Korridors liegt, und andernfalls als der an dem Nutzfahrzeug (10) angeordnete Verkehrszeichenaufkleber (9) klassifiziert wird.

8. Verfahren nach einem der vorhergehenden Ansprüche,
**dadurch gekennzeichnet, dass**
das Verkehrszeichen (7) als das stationäre Verkehrsschild (8) erkannt wird, falls in zumindest einem der Bilder (12) ein das Verkehrszeichen (7) haltender Pfosten (13) erkannt wird.

9. Verfahren nach einem der vorhergehenden Ansprüche,
**dadurch gekennzeichnet, dass**
eine durch das Verkehrszeichen (7) bereitgestellte Information, insbesondere eine in dem Umgebungsbereich (4) geltende Höchstgeschwindigkeit, einem Fahrerassistenzsystem (2) zum Unterstützen eines Fahrers des Kraftfahrzeugs (1) als eine Eingangsgröße bereitgestellt wird, falls das Verkehrszeichen (7) als das stationäre Verkehrsschild (8) klassifiziert wurde, und ignoriert wird, falls das Verkehrszeichen (7) als der an dem Nutzfahrzeug (10) angeordnete Verkehrszeichenaufkleber (9) klassifiziert wurde.

10. Rechenvorrichtung (6) für ein Fahrerassistenzsystem (2) eines Kraftfahrzeugs (1), welche dazu ausgelegt ist, ein Verfahren nach einem der vorhergehenden Ansprüche durchzuführen.

11. Fahrerassistenzsystem (2) für ein Kraftfahrzeug (1) zum Klassifizieren eines Verkehrszeichens (8) in einem Umgebungsbereich (4) des Kraftfahrzeugs (1) als ein an einem Nutzfahrzeug (10) angebrachter Verkehrszeichenaufkleber (9) oder ein stationäres Verkehrsschild (8), mit zumindest einer Kamera (3) zum Erfassen zumindest eines ersten Bildes (11, 12) des Umgebungsbereiches (4) und mit einer Rechenvorrichtung (6) nach Anspruch 10.

12. Kraftfahrzeug (1) mit einem Fahrerassistenzsystem (2) nach Anspruch 11.

## Claims

1. Method for classifying a traffic sign (7) in an environment region (4) of a motor vehicle (1) as a traffic sign sticker (9) located on an industrial or commercial vehicle (10) or as a stationary traffic sign (8), wherein in the method at least one first image (11, 12) of the environment region (4), captured by a camera (3) of the motor vehicle (1), is received and the traffic sign (7) is recognized in the at least one first image (11, 12), wherein a geometric dimension (D1', D2') of the traffic sign (7) in the first image (11, 12) is determined on the basis of said first image (11, 12), a first reference dimension (Dmin, Dmax), which is characteristic of a stationary traffic sign (14), is specified for the captured traffic sign (7), a first position (Pmin, Pmax) of the traffic sign (7) in the environment region (4) is estimated based on the geometric dimension (D1', D2') of the traffic sign (7) in the first image (11, 12) and on the basis of the first reference dimension (Dmin, Dmax), and the traffic sign (7) is classified as the traffic sign sticker (9) or as the stationary traffic sign (8) based on the estimated first position (Pmin, Pmax), wherein a movement progression of the traffic sign (7) in the images (11, 12) in image coordinates (a, b) is determined on the basis of the first image (11, 12) and at least one second image, which has been captured by the camera (3), **characterized in that** a first movement progression characterizing a stationary traffic sign (14) in the image coordinates (a, b) is determined proceeding from the first estimated position (Pmin, Pmax) in the environment region (4), and the captured traffic sign (7) is classified as the stationary traffic sign (8) or as the traffic sign sticker (9) on the basis of a comparison of the movement progression of the captured traffic sign (7) with the first characterizing movement progression, and **in that**, when comparing the movement progression of the captured traffic sign (7) with the characterizing movement progression, only image coordinates (a, b) along a horizontal direction are compared.

2. Method according to Claim 1,
**characterized in that**
a second reference dimension which is characteristic of the stationary traffic sign (14) is specified for the captured traffic sign (7), a second position (Pmin, Pmax) in the environment region (4) is estimated on the basis of the dimension of the traffic sign (7) in the image (11, 12) and on the basis of the second reference dimension, and the traffic sign (7) is classified as the traffic sign sticker (9) or the stationary traffic sign (8) on the basis of the estimated first and second positions (Pmin, Pmax).

3. Method according to Claim 1 or 2,
**characterized in that**
a predetermined minimum diameter (Dmin) that is characteristic of the stationary traffic sign (14) is specified as the first reference dimension, and a predetermined maximum diameter (Dmax) that is characteristic of the stationary traffic sign (14) is specified as a second reference dimension.

4. Method according to Claim 3, **characterized in that** the minimum diameter (Dmin) is 40 cm and/or the maximum diameter (Dmax) is 2 m.

5. Method according to one of the preceding claims,
**characterized in that**
a lateral distance (Amin, Amax, A) between the traffic sign (7) and the motor vehicle (1) is determined at least on the basis of the first position (Pmin, Pmax) and the traffic sign (7) is classified as the stationary traffic sign (8) if the lateral distance (Amin, Amax, A) falls below a predetermined threshold value, and the traffic sign (7) is classified as the traffic sign sticker (9) if the lateral distance (Amin, Amax, A) at least exceeds the predetermined threshold value.

6. Method according to one of the preceding claims,
**characterized in that**
a second position (Pmin, Pmax) of the traffic sign (7) in the environment region (4) is additionally estimated on the basis of the first image (11, 12) and on the basis of a second predetermined reference dimension (Dmin, Dmax) of the stationary traffic sign (14), a second movement progression characterizing a stationary traffic sign in the image coordinates (a, b) is determined proceeding from the second estimated position (Pmin, Pmax) in the environment region (4), and the captured traffic sign (7) is classified as the stationary traffic sign (8) or as the traffic sign sticker (9) on the basis of the comparison of the movement progression of the captured traffic sign (7) with the second characterizing movement progression.

7. Method according to Claim 6,
**characterized in that**
the captured traffic sign (7) is identified as the stationary traffic sign (8) if the movement progression of the captured traffic sign (7) is located within a corridor that is formed by the first and the second characterizing movement progression, and otherwise is classified as the traffic sign sticker (9) located on the industrial or commercial vehicle (10).

8. Method according to one of the preceding claims,
**characterized in that**
the traffic sign (7) is recognized as the stationary traffic sign (8) if in at least one of the images (12) a post (13) holding the traffic sign (7) is recognized.

9. Method according to one of the preceding claims,
**characterized in that**
information provided by the traffic sign (7), in particular a maximum speed that applies in the environment region (4), is made available to a driver assistance system (2) for assisting a driver of the motor vehicle (1) in the form of an input variable if the traffic sign (7) has been classified as the stationary traffic sign (8), and is ignored if the traffic sign (7) has been classified as the traffic sign sticker (9) arranged on the industrial or commercial vehicle (10).

10. Computational apparatus (6) for a driver assistance system (2) of a motor vehicle (1), which is designed to perform a method according to one of the preceding claims.

11. Driver assistance system (2) for a motor vehicle (1) for classifying a traffic sign (8) in an environment region (4) of the motor vehicle (1) as a traffic sign sticker (9) that is affixed to a commercial or industrial vehicle (10) or as a stationary traffic sign (8), having at least one camera (3) for capturing at least one first image (11, 12) of the environment region (4) and having a computational apparatus (6) according to Claim 10.

12. Motor vehicle (1) having a driver assistance system (2) according to Claim 11.

## Revendications

1. Procédé de classification d'un signal routier (7) dans une zone environnante (4) d'un véhicule automobile (1) comme autocollant de signalisation (9) disposé sur un véhicule utilitaire (10) ou comme panneau de signalisation stationnaire (8), dans lequel lors du procédé au moins une première image (11, 12) de la zone environnante (4) capturée par une caméra (3) du véhicule automobile (1) est reçue et le signal routier (7) est reconnu dans l'au moins une première image (11, 12), dans lequel une dimension géométrique (D1', D2') du signal routier (7) dans la première image (11, 12) est déterminée à l'aide de la première image (11, 12), une première dimension de référence (Dmin, Dmax) caractéristique d'un panneau de signalisation stationnaire (14) est prédéfinie pour le signal routier détecté (7), une première position (Pmin, Pmax) du signal routier (7) dans la zone environnante (4) est évaluée à l'aide de la dimension géométrique (D1', D2') du signal routier (7) dans la première image (11, 12) et à l'aide de la première dimension de référence (Dmin, Dmax) et le signal routier (7) est classé comme autocollant de signalisation (9) ou comme panneau de signalisation stationnaire (8) à l'aide de la première position estimée (Pmin, Pmax), dans lequel une trajectoire du signal routier (7) dans les images (11, 12) est déterminée en coordonnées d'image (a, b) à l'aide de la première image (11, 12) et d'au moins une deuxième image capturée par la caméra (3), **caractérisé en ce qu'**à partir de la première position évaluée (Pmin, Pmax) dans la zone environnante (4), une première trajectoire caractérisant un panneau de signalisation stationnaire (14) est déterminée en coordonnées d'image (a, b) et, à l'aide d'une comparaison de la trajectoire du signal routier (7) capturé avec la première trajectoire caractéristique, le signal routier (7) capturé est classé comme panneau de signalisation stationnaire (8) ou comme autocollant de signalisation (9), et **en ce que**, lors de la comparaison de la trajectoire du signal routier (7) capturé avec la trajectoire caractéristique, seules les coordonnées d'image (a, b) le long d'une direction horizontale sont comparées.

2. Procédé selon la revendication 1, **caractérisé en ce qu'**une deuxième dimension de référence caractéristique du panneau de signalisation stationnaire (14) est prédéfinie pour le signal routier (7) capturé, une deuxième position (Pmin, Pmax) dans la zone environnante (4) est évaluée à l'aide de la dimension du signal routier (7) dans l'image (11, 12) et à l'aide de la deuxième dimension de référence, et le signal routier (7) est classé comme autocollant de signalisation (9) ou comme panneau de signalisation stationnaire (8) à l'aide de la première et de la deuxième position estimée (Pmin, Pmax).

3. Procédé selon la revendication 1 ou 2, **caractérisé en ce qu'**un diamètre minimum prédéterminé (Dmin) caractéristique du panneau de signalisation stationnaire (14) est prédéfini comme première dimension de référence et un diamètre maximum prédéterminé (Dmax) caractéristique du panneau de signalisation stationnaire (14) est prédéfini comme deuxième dimension de référence.

4. Procédé selon la revendication 3, **caractérisé en ce que** le diamètre minimum (Dmin) vaut 40 cm et/ou diamètre maximum prédéterminé (Dmax) vaut 2 m.

5. Procédé selon l'une des revendications précédentes, **caractérisé en ce qu'**une distance latérale (Amin, Amax, A) entre le signal routier (7) et le véhicule automobile (1) est déterminée au moins à l'aide de la première position (Pmin, Pmax) et le signal routier (7) est classé comme panneau de signalisation stationnaire (8) au cas où la distance latérale (Amin, Amax, A) sous-dépasse une valeur seuil prédéterminée, et le signal routier (7) est classé comme panneau de signalisation autocollant (9) au cas où la distance latérale (Amin, Amax, A) dépasse au moins la valeur seuil prédéterminée.

6. Procédé selon l'une des revendications précédentes, **caractérisé en ce qu'**une deuxième position (Pmin, Pmax) du signal routier (7) dans la zone environnante (4) est évaluée à l'aide de la première image (11, 12) et à l'aide d'une deuxième dimension de référence prédéterminée (Dmin, Dmax) du panneau de signalisation stationnaire (14), une deuxième trajectoire caractérisant un panneau de signalisation stationnaire est déterminée en coordonnées d'image (a, b) à partir de la deuxième position évaluée (Pmin, Pmax) dans la zone environnante (4) et, à l'aide de la comparaison de la trajectoire du signal routier (7) capturé avec la deuxième trajectoire caractéristique, le signal routier (7) capturé est classé comme panneau de signalisation stationnaire (8) ou comme autocollant de signalisation (9).

7. Procédé selon la revendication 6, **caractérisé en ce que** le signal routier (7) capturé est identifié comme panneau de signalisation stationnaire (8) lorsque la trajectoire du signal routier (7) capturé se trouve à l'intérieur d'un couloir formé par la première et la deuxième trajectoire caractéristique, et est autrement classé comme autocollant de signalisation (9) disposé sur le véhicule utilitaire (10).

8. Procédé selon l'une des revendications précédentes, **caractérisé en ce que** le signal routier (7) est reconnu comme panneau de signalisation stationnaire (8) au cas où un poteau (13) portant le signal routier (7) est reconnu dans au moins une des images (12).

9. Procédé selon l'une des revendications précédentes, **caractérisé en ce qu'**une information fournie par le signal routier (7), notamment une vitesse maximale applicable dans la zone environnante (4), est mise à disposition en tant que grandeur d'entrée d'un système d'aide à la conduite (2) destiné à assister un conducteur du véhicule automobile (1) au cas où le signal routier (7) a été classé comme panneau de signalisation stationnaire (8) et est ignorée si le signal routier (7) a été classé comme autocollant de signalisation (9) disposé sur le véhicule utilitaire (10).

10. Dispositif de calcul (6) pour un système d'aide à la conduite (2) d'un véhicule automobile (1), lequel est configuré pour mettre en œuvre un procédé selon l'une des revendications précédentes.

11. Système d'aide à la conduite (2) pour un véhicule automobile (1) destiné à la classification d'un signal routier (8) dans une zone environnante (4) du véhicule automobile (1) en tant qu'autocollant de signalisation (9) arrangé sur un véhicule utilitaire (10) ou en tant que panneau de signalisation stationnaire (8), doté d'au moins une caméra (3) destinée à la capture d'au moins une première image (11, 12) de la zone environnante (4) et doté d'un dispositif de calcul (6) selon la revendication 10.

12. Véhicule automobile (1) doté d'un système d'aide à la conduite (2) selon la revendication 11.
